# NEW EUROPEAN PATENT SPECIFICATION

(11) **EP 2 599 830 B2**
(45) Date of publication and mention of the opposition decision: **28.09.2022**
(45) Mention of the grant of the patent: 19.10.2016
(21) Application number: 11812176.3
(22) Date of filing: 14.06.2011
(51) Int. Cl.: C08L 27/04, C08K 3/26, C08K 5/053, C08K 5/26, C08K 5/56

(54) **VINYL-CHLORIDE-BASED RESIN COMPOSITION FOR TRANSPARENT PRODUCT**
VINYLCHLORID-HARZZUSAMMENSETZUNG FÜR EIN TRANSPARENTES PRODUKT
COMPOSITION DE RÉSINE À BASE DE CHLORURE DE VINYLE POUR PRODUIT TRANSPARENT

(30) Priority: 29.07.2010 JP 2010170093
(43) Date of publication of application: 05.06.2013
(73) Proprietor: Adeka Corporation, Tokyo 1160012 (JP)
(72) Inventor: ODAGIRI Keiichi, Saitama-shi Saitama 336-0022 (JP); SENGOKU Tadashi, Saitama-shi Saitama 336-0022 (JP)
(74) Representative: Gill Jennings & Every LLP
(86) International application number: PCT/JP2011/063597
(87) International publication number: WO 2012/014583

(56) References cited:
- EP-A1- 0 116 931
- EP-A1- 2 336 237
- WO-A1-2010/041378
- CN-A- 101 508 636
- JP-A- 1 256 552
- JP-B2- 2 896 553
- JP-B2- 2 987 741
- US-A1- 2002 155 397
- US-B1- 6 448 314
- "Chiguard 1033 - Ultraviolet light absorber for plastics", Product Data Sheet Chiguard 1033, 20 September 2006 (2006-09-20), pages 1-2,
- Alcamizcr data sheet dated 19.4.2002. Delivery note dated 13.1.2004. Certificate of conformity dated 13.1.2004

## Description

### TECHNICAL FIELD

The present invention relates to a vinyl chloride-based resin composition. More particularly, the present invention relates to a vinyl chloride-based resin composition for transparent products which has sufficient transparency as well as improved performances such as initial coloration property and weathering resistance.

### BACKGROUND ART

Chlorine-containing resins such as vinyl chloride resins have excellent flame retardancy and chemical resistance; therefore, they are used in a variety of applications. However, chlorine-containing resins have a drawback in that they are thermally degraded to cause dehydrochlorination which results in a reduction in the mechanical strength and occurrence of coloration, impairing their marketability.

In order to solve this drawback, a variety of stabilizers have been developed and particularly, for example, mixtures of a lead compound or a cadmium compound and a barium compound have been known to exhibit excellent stabilization effect. However, in recent years, from the safety standpoint, the trend is toward restricting the use of a lead compound and a cadmium compound, so that the combinatory use of a safer zinc compound and an organic acid salt of an alkaline earth metal or an inorganic compound such as hydrotalcite or zeolite is gradually replacing lead and cadmium compounds to provide stabilization of chlorine-containing resins.

Still, since such low toxic stabilizers alone cannot provide sufficient stabilization effect, in order to improve the resistance to light, heat, oxidation and the like, a variety of additives, such as organic phosphite compounds, epoxy compounds, phenolic antioxidants, benzophenone-based or benzotriazole-based ultraviolet absorbers and hindered amine-based light stabilizers, are used in combination. Meanwhile, in Patent Documents 1 to 3, it is proposed to use a calcium salt of acetylacetonate.

### RELATED ART DOCUMENTS

### PATENT DOCUMENTS

Patent Document 1: Japanese Patent No. 2887564
Patent Document 2: Japanese Patent No. 2896553
Patent Document 3: Japanese Patent No. 2987741

### SUMMARY OF THE INVENTION

### PROBLEMS TO BE SOLVED BY THE INVENTION

However, in such combinatory use of a low-toxic stabilizer, an antioxidant and an ultraviolet absorber as described in the above for transparent product applications, there is a problem in that it is difficult to improve the coloration properties and the weathering resistance of the resin composition to which they are blended without impairing the transparency. Here, Patent Documents 1 to 3 offers no disclosure or suggestion with regard to the combinatory use of zinc acetylacetonate, a zinc-modified hydrotalcite and an ultraviolet absorber and that such a combination can improve the initial coloration property and weathering resistance without impairing the transparency of the resulting transparent product.

Therefore, an object of the present invention is to provide a vinyl chloride-based resin composition for transparent products which has sufficient transparency as well as improved performances such as initial coloration property and weathering resistance.

### MEANS FOR SOLVING THE PROBLEMS

The present inventors intensively studied to solve the above-described problems and discovered that the above-described object can be achieved by using zinc acetylacetonate, a zinc-modified hydrotalcite and an ultraviolet absorber in combination, thereby completing the present invention.

That is, the vinyl chloride-based resin composition for transparent products according to the present invention is characterized by comprising 0.01 to 0.3 parts by mass of (a) zinc acetylacetonate, 0.1 to 10 parts by mass of (b) a zinc-modified hydrotalcite and 0.1 to 10 parts by mass of (c) an ultraviolet absorber, with respect to 100 parts by mass of a vinyl chloride-based resin.

In the vinyl chloride-based resin composition for transparent products according to the present invention, it is preferred that the above-described (b) zinc-modified hydrotalcite be a compound represented by the following Formula (I):

Mgₓ₁Znₓ₂Al₂(OH)_{2(X1+X2)+4} · CO₃ · mH₂O (I)

(wherein, x1 and x2 each represent a number satisfying the following equations and m represents a real number: 0.1 ≤ x2/x1 < 10, 2 ≤ x1 + x2 < 20).

Further, in the vinyl chloride-based resin composition for transparent products according to the present invention, it is preferred that the above-described (c) ultraviolet absorber be a substituted oxanilide.

It is preferred that the vinyl chloride-based resin composition for transparent products according to the present invention further contain 0.001 to 5 parts by mass of (d) a polyol with respect to 100 parts by mass of the vinyl chloride-based resin.

Further, in the vinyl chloride-based resin composition for transparent products according to the present invention, it is preferred that the above-described (d) polyol be at least one selected from the group consisting of maltitol, mannitol and lactitol.

### EFFECTS OF THE INVENTION

The vinyl chloride-based resin composition for transparent products according to the present invention is excellent in transparency as well as initial coloration property and weathering resistance; therefore, it can be suitably used in those applications such as corrugated panels, plates and pipes.

### MODES FOR CARRYING OUT THE INVENTION

The vinyl chloride-based resin composition for transparent products according to the present invention will now be described in detail. The vinyl chloride-based resin composition for transparent products according to the present invention comprises 0.01 to 0.3 parts by mass of (a) zinc acetylacetonate, 0.1 to 10 parts by mass of (b) a zinc-modified hydrotalcite and 0.1 to 10 parts by mass of (c) an ultraviolet absorber, with respect to 100 parts by mass of a vinyl chloride-based resin. Preferably, the vinyl chloride-based resin composition for transparent products according to the present invention further comprises 0.001 to 5 parts by mass of (d) a polyol.

The vinyl chloride-based resin used in the present invention is not particularly restricted to those that are produced by bulk polymerization, solution polymerization, suspension polymerization or emulsion polymerization. Examples of the vinyl chloride-based resin used in the present invention include vinyl chloride-based resins such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride ternary copolymers, vinyl chloride-styrene-acrylonitrile copolymers, vinyl chloride-butadiene copolymers, vinyl chloride-isoprene copolymers, vinyl chloride-chlorinated propylene copolymers, vinyl chloride-vinylidene chloride-vinyl acetate ternary copolymers, vinyl chloride-maleic acid ester copolymers, vinyl chloride-methacrylic acid ester copolymers, vinyl chloride-acrylonitrile copolymers and copolymers of vinyl chloride and various vinyl ethers; blend products of these resins with each other; and blend products, block copolymers, and graft copolymers that are formed by these resins with other chlorine-free synthetic resins, such as acrylonitrile-styrene copolymers, acrylonitrile-butadiene-styrene copolymers, ethylene-vinyl acetate copolymers, ethylene-ethyl(meth)acrylate copolymers and polyesters.

The zinc acetylacetonate used in the present invention as the component (a) may be any acid salt, basic salt or neutral salt.

The amount of the above-described zinc acetylacetonate to be added is 0.01 to 0.3 parts by mass, preferably 0.05 to 0.2 parts by mass, with respect to 100 parts by mass of the vinyl chloride-based resin. When the amount is less than 0.01 parts by mass, the coloration property-improving effect is limited, while when the amount is larger than 0.3 parts by mass, the heat resistance may be impaired.

The zinc-modified hydrotalcite used in the present invention as the component (b) is a carbonic acid complex salt compound of magnesium, zinc and aluminum, preferably a compound represented by the following Formula (I).

Mgₓ₁Znₓ₂Al₂(OH)_{2(X1+X2)+4} · CO₃ · mH₂O (I)

(wherein, x1 and x2 each represent a number satisfying the following equations and m represents a real number: 0.1 ≤ x2/x1 < 10, 2 ≤ x1 + x2 < 20).

Further, the above-described zinc-modified hydrotalcite may be coated with, for example, a higher fatty acid such as stearic acid, a higher fatty acid metal salt such as alkali metal oleate, an organic sulfonic acid metal salt such as alkali metal dodecylbenzene sulfonate, a higher fatty acid amide, a higher fatty acid ester or a wax.

The amount of the above-described zinc-modified hydrotalcite to be added is 0.1 to 10 parts by mass, preferably 0.5 to 5 parts by mass, with respect to 100 parts by mass of the vinyl chloride-based resin. When the amount is less than 0.1 parts by mass, the effects thereof to improve the heat resistance and weathering resistance are limited, while when the amount is larger than 10 parts by mass, foam formation may occur to impair the outer appearance and physical properties of the resulting molded article.

Examples of the ultraviolet absorber used in the present invention as the component (c) include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole and 2,2'-methylenebis(4-tert-octyl-6-benzotriazolyl)phenol; benzoates such as phenyl salicylate, resorcinol monobenzoate, 2,4-di-tert-butylphenyl-3',5'-di-tert-butyl-4'-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; and cyanoacrylates such as ethyl-α-cyano-β,β-diphenyl acrylate and methyl-2-cyano-3-methyl-3-(p-methoxyphenyl)acrylate.

The amount of the above-described ultraviolet absorber to be added is 0.1 to 10 parts by mass, preferably 0.5 to 10 parts by mass, with respect to 100 parts by mass of the vinyl chloride-based resin. When the amount is less than 0.1 parts by mass, the weathering resistance-improving effect may not be attained, while when the amount is larger than 10 parts by mass, the coloration properties may be deteriorated.

It is preferred that the vinyl chloride-based resin composition for transparent products according to the present invention further contain (d) a polyol since it is expected to improve the thermal stability.

Examples of the above-described polyol include pentaerythritol, dipentaerythritol, sorbitol, mannitol, maltitol, lactitol, xylitol, xylose, sucrose, trehalose, inositol, fructose, maltose, lactose, trimethylolpropane, ditrimethylolpropane, stearic acid partial ester of pentaerythritol or dipentaerythritol, bis(dipentaerythritol)adipate, glycerin, diglycerin and tris(2-hydroxyethyl)isocyanurate. Thereamong, it is preferred that the above-described polyol be at least one selected from the group consisting of maltitol, mannitol and lactitol since a reduction in the transparency of the vinyl chloride-based resin composition for transparent products is suppressed.

The amount of the above-described polyol to be added is preferably 0.01 to 5 parts by mass, more preferably 0.05 to 3 parts by mass, with respect to 100 parts by mass of the vinyl chloride-based resin.

Further, to the vinyl chloride-based resin composition for transparent products according to the present invention, other additive(s) normally used in a vinyl chloride-based resin composition may be added, and examples of such additives include plasticizers; organic acid metal salts; zeolite compounds; β-diketone compounds; perchlorates; epoxy compounds; phosphorus-based, phenolic and sulfur-based antioxidants; hindered amine-based light stabilizers; fillers; and lubricants.

Examples of the above-described plasticizers include phthalate-based plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate-based plasticizers such as dioctyl adipate, diisononyl adipate, diisodecyl adipate and di(butyldiglycol)adipate; phosphate-based plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester-based plasticizers obtained by using ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, or neopentyl glycol as polyalcohol, and oxalic acid, malonic acid, succinic acid, glutaric acid, adipic acid, pimelic acid, suberic acid, azelaic acid, sebacic acid, phthalic acid, isophthalic acid or terephthalic acid as dibasic acid, in which polyester-based plasticizers a monohydric alcohol or a monocarboxylic acid is used as a stopper as required; tetrahydrophthalic acid-based plasticizers; azelaic acid-based plasticizers; sebacic acid-based plasticizers; stearic acid-based plasticizers; citric acid-based plasticizers; trimellitic acid-based plasticizers; pyromellitic acid-based plasticizers; biphenyl tetracarboxylic acid ester-based plasticizers; and chlorine-based plasticizers.

Examples of the above-described organic acid metal salts include metal salts (such as sodium, potassium, calcium, barium, aluminum and zinc salts) of organic carboxylic acids, phenols and organic phosphoric acids.

Examples of the above-described organic carboxylic acids include monocarboxylic acids such as acetic acid, propionic acid, butyric acid, valeric acid, caproic acid, enanthic acid, caprylic acid, pelargonic acid, 2-ethylhexanoic acid, neodecanoic acid, capric acid, undecanoic acid, lauric acid, tridecanoic acid, myristic acid, palmitic acid, isostearic acid, stearic acid, 12-hydroxystearic acid, behenic acid, montanoic acid, benzoic acid, monochlorobenzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, cuminic acid, n-propylbenzoic acid, aminobenzoic acid, N,N-dimethylamino benzoic acid, acetoxybenzoic acid, salicylic acid, p-tert-octylsalicylic acid, elaidic acid, oleic acid, linoleic acid, linolenic acid, thioglycolic acid, mercaptopropionic acid and octyl mercaptopropionic acid; dicarboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, methaconic acid, itaconic acid, aconitic acid and thiodipropionic acid, or monoester or monoamide compounds of these dicarboxylic acids; and tri- or tetra-carboxylic acids such as butanetricarboxylic acid, butanetetracarboxylic acid, hemimellitic acid, trimellitic acid, mellophanic acid and pyromellitic acid, or di- or tri-ester compounds of these tri- or tetra-carboxylic acids.

Examples of the above-described phenols include tert-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tert-nonylphenol, decylphenol, tert-octylphenol, isohexylphenol, octadecylphenol, diisobutylphenol, methyl propyl phenol, diamylphenol, methyl isohexyl phenol and methyl-tert-octyl phenol.

Further, examples of the above-described organic phosphoric acids include mono- or di-octyl phosphoric acid, mono- or di-dodecyl phosphoric acid, mono- or di-octadecyl phosphoric acid, mono- or di-(nonylphenyl)phosphoric acid, nonylphenyl phosphonate and stearyl phosphonate.

Further, the above-described metal salts of organic carboxylic acids, phenols and organic phosphoric acids may also be an acidic salt, a neutral salt, a basic salt or a perbasic complex obtained by partially or entirely neutralizing the base of a basic salt with carbonic acid.

The above-described zeolite compounds are aluminosilicates of an alkali or an alkaline earth metal which have a unique three-dimensional zeolite crystal structure, and representative examples thereof include A-type, X-type, Y-type and P-type zeolites, monodenite, analcite, sodalite-family aluminosilicates, clinoptilolite, erionite and chabazite. These zeolite compounds may be either a hydrate having crystal water (so-called zeolite water) or an anhydride in which the crystal water is removed. Further, zeolites having a particle size of 0.1 to 50 µm may be used and those having a particle size of 0.5 to 10 µm are particularly preferred.

Examples of the above-described β-diketone compounds include dehydroacetic acid, dibenzoylmethane, palmitoylbenzoylmethane and stearoylbenzoylmethane, and metal salts of these compounds are also equally useful.

Examples of the above-described perchlorates include metal perchlorates, ammonium perchlorates, perchloric acid-treated hydrotalcites and perchloric acid-treated silicates. Here, examples of the metals constituting the above-described metal perchlorates include lithium, sodium, potassium, calcium, magnesium, strontium, barium, zinc, cadmium, lead and aluminum. The above-described metal perchlorates may be an anhydride or a hydrate salt. Alternatively, the above-described metal perchlorates may be one which is dissolved in an alcohol-based or ester-based solvent such as butyl diglycol or butyl diglycol adipate, or may be a dehydrate thereof.

Examples of the above-described epoxy compounds include bisphenol-type and novolac-type epoxy resins, epoxidized soybean oils, epoxidized linseed oils, epoxidized tung oils, epoxidized fish oils, epoxidized beef tallow oils, epoxidized castor oils, epoxidized safflower oils, epoxidized tall oil fatty acid octyl, epoxidized linseed oil fatty acid butyl, methyl epoxystearate, butyl epoxystearate, 2-ethylhexyl epoxy stearate, stearyl epoxystearate, tris(epoxypropyl)isocyanurate, 3-(2-xenoxy)-1,2-epoxypropane, epoxidized polybutadiene, bisphenol-A diglycidyl ether, vinylcyclohexene diepoxide, dicyclopentadiene diepoxide, 3,4-epoxycyclohexyl-6-methylepoxycyclohexane carboxylate and bis(3,4-epoxycyclohexyl)adipate.

Examples of the above-described phosphorus-based antioxidants include triphenyl phosphite, tris(2,4-di-tert-butylphenyl)phosphite, tris(nonylphenyl)phosphite, tris(dinonylphenyl)phosphite, tris(mono-, di-mixed nonylphenyl)phosphite, bis(2-tert-butyl-4,6-dimethylphenyl)·ethyl phosphite, diphenyl acid phosphite, 2,2'-methylenebis(4,6-di-tert-butylphenyl)octyl phosphite, diphenyldecyl phosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentyl glycol)·1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, distearyl pentaerythritol diphosphite, tetra(C12-15 mixed alkyl)-4,4'-isopropylidene diphenylphosphite, bis[2,2'-methylenebis(4,6-diamylphenyl)]·isopropylidene diphenylphosphite, hydrogenated-4,4'-isopropylidene diphenol polyphosphite, tetra(tridecyl)·4,4'-butylidenebis(2-tert-butyl-5-methylphenol)diphosphite, hexa(tridecyl)·1,1,3-tris(2-methyl-5-tert-butyl-4-hydroxyphenyl)butane·triphosphonite, 9,10-dihydro-9-oxa-10-phosphaphenanthrene-10-oxide and 2-butyl-2-ethylpropanediol-2,4,6-tri-tert-butylphenol monophosphite.

Examples of the above-described phenolic antioxidants include 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydroxybenzyl)phosphonate, thiodiethylene glycol-bis[(3,5-di-tert-butyl-4-hydroxyphenyl)propionate], 1,6-hexamethylenebis[(3,5-di-tert-butyl-4-hydroxyphenyl)propionate], 1,6-hexamethylenebis[(3,5-di-tert-butyl-4-hydroxyphenyl)propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid]glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl)propionyloxy} ethyl]-2,4,8,10-tetraoxaspiro[5.5]undecane and triethylene glycol-bis[(3-tert-butyl-4-hydroxy-5-methylphenyl)propionate].

Examples of the above-described sulfur-based antioxidants include dialkyl thiodipropionates such as dilauryl, dimyristyl and distearyl thiodipropionates; and β-alkylmercapto propionic acid esters of polyols such as pentaerythritol tetra(β-dodecylmercaptopropionate).

Examples of the above-described hindered amine-based light stabilizers include 2,2,6,6-tetramethyl-4-piperidyl stearate, 1,2,2,6,6-pentamethyl-4-piperidyl stearate, 2,2,6,6-tetramethyl-4-piperidylbenzoate, N-(2,2,6,6-tetramethyl-4-piperidyl)dodecyl succinimide, 1-[(3,5-di-tert-butyl-4-hydroxyphenyl)propionyloxyethyl]-2,2,6,6-tetramethyl-4-piperidyl-(3,5-di-tert-butyl-4-hydroxyphenyl)propionate, bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-butyl-2-(3,5-di-tert-butyl-4-hydroxybenzyl)malonate, N,N'-bis(2,2,6,6-tetramethyl-4-piperidyl)hexamethylenediamine, tetra(2,2,6,6-tetramethyl-4-piperidyl)butane tetracarboxylate, tetra(1,2,2,6,6-pentamethyl-4-piperidyl)butane tetracarboxylate, bis(2,2,6,6-tetramethyl-4-piperidyl)·di(tridecyl)butane tetracarboxylate, bis(1,2,2,6,6-pentamethyl-4-piperidyl)·di(tridecyl)butane tetracarboxylate, 3,9-bis[1,1-dimethyl-2-{tris(2,2,6,6-tetramethyl-4-piperidyloxycarbonyloxy)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyloxy)butylcarbonyloxy}ethyl]-2,4,8,10-tetraoxaspiro[5.5]undecane, 1,5,8,12-tetrakis[4,6-bis{N-(2,2,6,6-tetramethyl-4-piperidyl)butylamino}-1,3,5-triazine-2-yl]-1,5,8,12-tetraazadodecane, 1-(2-hydroxyethyl)-2,2,6,6-tetramethyl-4-piperidinol/dimethyl succinate condensate, 2-tert-octylamino-4,6-dichloro-s-triazine/N,N'-bis(2,2,6,6-tetramethyl-4-piperidyl)hexamethylenediamine condensate and N,N'-bis(2,2,6,6-tetramethyl-4-piperidyl)hexamethylenediamine/dibromoethane condensate.

Examples of the above-described fillers include calcium carbonate, silica, clay, glass beads, mica, sericite, glass flakes, asbestos, wollastonite, potassium titanate, PMF, gypsum fibers, xonotlite, MOS, phosphate fibers, glass fibers, carbon fibers and aramid fibers.

Examples of the above-described lubricants include hydrocarbons such as natural paraffin and low molecular weight polyethylene; fatty acids such as stearic acid, lauric acid and erucic acid; aliphatic alcohols such as cetyl alcohol and stearyl alcohol; fatty acid amides such as stearic acid amide and methylenebis stearamide; lower alcohol esters of fatty acids such as butyl stearate; and higher alcohol esters of higher fatty acids such as glycerol monostearate.

In addition, in the vinyl chloride-based resin composition for transparent products according to the present invention, an additive(s) normally used in a vinyl chloride-based resin, such as a cross-linking agent, an antistatic agent, an anti-clouding agent, an anti-plate-out agent, a surface treatment agent, a flame retardant, a fluorescent agent, an antifungal agent, a sterilizer, a metal inactivator, a mold release agent and/or a processing aid, may also be blended as required.

Further, the vinyl chloride-based resin composition for transparent products according to the present invention can be processed by an ordinary processing method for vinyl chloride-based resins. For example, the vinyl chloride-based resin composition for transparent products according to the present invention can be suitably processed by calendering, roll processing, extrusion molding, melt-rolling, injection molding, press molding, paste processing, powder molding or foam molding.

The vinyl chloride-based resin composition for transparent products according to the present invention can be used in building materials such as wall materials, floor materials, window frames, corrugated panels and rain gutters; automotive interior and exterior materials; fish and food packaging materials such as trays; and miscellaneous goods such as packings, gaskets, hoses, pipes, joints, sheets and toys.

### EXAMPLES

The present invention will now be described in more detail by way of examples thereof; however, the present invention is not restricted to the following examples.

### (Examples 1 to 7 and Comparative Examples 1 to 5)

The components shown in Tables 1 and 2 were blended using a 10-L Henschel mixer to prepare the respective resin compositions and sheet samples were produced therefrom using a biaxial extrusion molding machine (cylinder 1: 160°C, cylinder 2: 170°C, cylinder 3: 180°C, die: 190°C, screw speed: 15 rpm). Then, the following tests were performed. The results are shown in Tables 1 and 2 below.

### [Coloration Resistance (Initial Coloration Property)]

The yellowness (Y.I.) of the respective sheet samples obtained in the above was measured using a differential colorimeter (MODEL TC-8600A; manufactured by Tokyo Denshoku Co., Ltd.).

### [Thermal Stability]

The above-described sheet samples were placed in a Geer oven maintained at 190°C and the time (minutes) required for each sample to be blackened was measured.

### [Transparency]

The above-described sheet samples were subjected to press-working for 5 minutes at a temperature of 190°C and a load of 150 kg/cm² to prepare 1 mm-thick plates and the haze value (transparency) of each plate was measured using a haze meter (HAZE-GARDII; manufactured by Toyo Seiki Seisaku-Sho, Ltd.).

### [Weathering Resistance]

Further, the above-described 1 mm-thick plates were placed in a super accelerated weathering resistance tester (DAIPLA METALWEATHER KU-R5NCI; manufactured by Daipla Wintes Co., Ltd.) which was set to have the following conditions and the yellowness (Y.I.) of each plate was measured using a differential colorimeter at certain time intervals.

L (light irradiation conditions): 39.6 mW/cm² (irradiation intensity) × 50°C × 50% RH × 4 hours

D (dew condensation conditions, no light irradiation): 30°C × 98% RH × 4 hours

L and D were repeated.

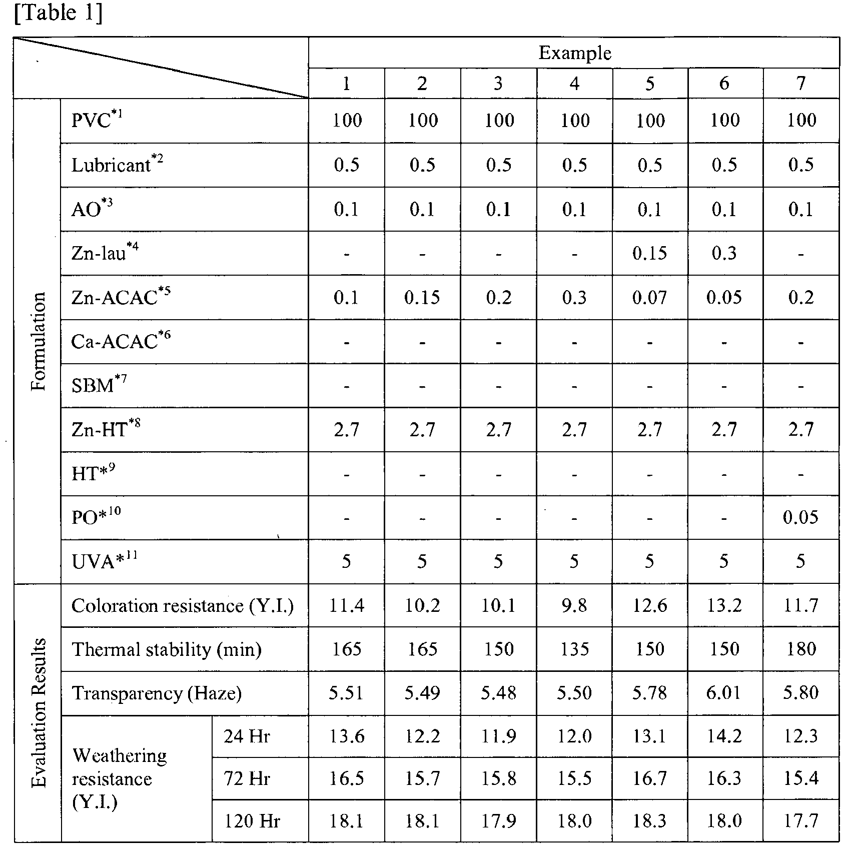

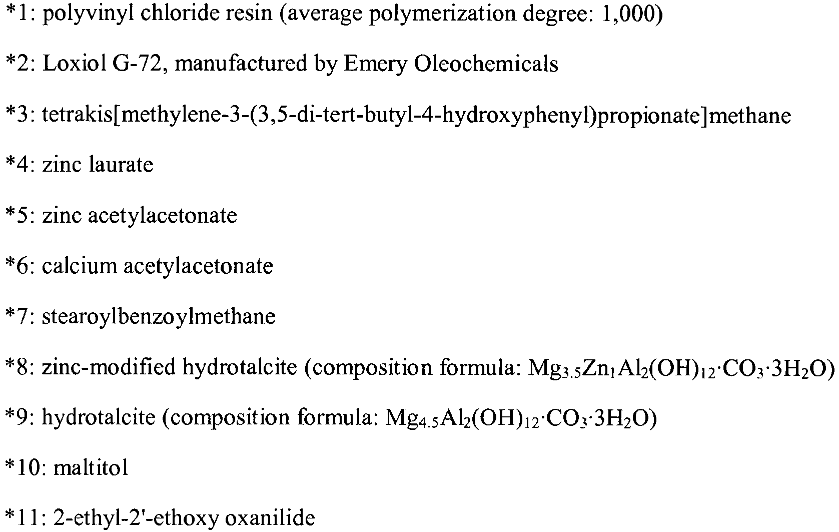

**[Table 2]**

| | | | Comparative Example | | | | |
|---|---|---|---|---|---|---|---|
| | | | 1 | 2 | 3 | 4 | 5 |
| Formulation | PVC^{*1} | | 100 | 100 | 100 | 100 | 100 |
| | Lubricant *2 | | 0.5 | 0.5 | 0.5 | 0.5 | 0.5 |
| | AO^{*3} | | 0.1 | 0.1 | 0.1 | 0.1 | 0.1 |
| | Zn-lau^{*4} | | - | - | - | - | - |
| | Zn-ACAC^{*5} | | - | 0.2 | 0.5 | 0.2 | - |
| | Ca-ACAC^{*6} | | - | - | - | - | 0.2 |
| | SBM^{*7} | | 0.5 | - | - | - | - |
| | Zn-HT^{*8} | | 2.7 | 2.7 | 2.7 | - | - |
| | HT^{*9} | | - | - | - | 2.7 | 2.7 |
| | PO^{*10} | | - | - | - | - | - |
| | UVA^{*11} | | 5 | - | 5 | 5 | 5 |
| Evaluation Results | Coloration resistance (Y.I.) | | 14.4 | 9.9 | blackened | 10.5 | 25.9 |
| | Thermal stability (min) | | 150 | 165 | 15 | 165 | 135 |
| | Transparency (Haze) | | 6.15 | 5.47 | 5.49 | 14.3 | 21.5 |
| | Weathering resistance (Y.I.) | 24 Hr | 15.4 | 42.8 | - | 12.5 | - |
| | | 72 Hr | 20.0 | - | - | 15.9 | - |
| | | 120 Hr | 23.6 | - | - | 18.3 | - |
| * 1 to *11 represent the same as in the above-described Table 1. | | | | | | | |

As clearly seen from the above-described Examples, when appropriate amounts of zinc acetylacetonate, a zinc-modified hydrotalcite and an ultraviolet absorber were used in combination, vinyl chloride-based resin compositions for transparent products that are excellent in coloration resistance, thermal stability, transparency and weathering resistance were obtained.

In contrast, when stearoylbenzoylmethane was used in place of zinc acetylacetonate (Comparative Example 1), the resulting sample had poor coloration resistance, and when no ultraviolet absorber was used (Comparative Example 2), the resulting sample had extremely poor weathering resistance. When zinc acetylacetonate was used in an amount larger than the appropriate amount (Comparative Example 3), the resulting sample had poor thermal stability, and when a conventional hydrotalcite was used in place of the zinc-modified hydrotalcite (Comparative Example 4), the resulting sample had poor transparency. Furthermore, when calcium acetylacetonate was used in place of zinc acetylacetonate (Comparative Example 5), the coloration properties and transparency were both markedly impaired.

## Claims

1. A vinyl chloride-based resin composition for transparent products, which is **characterized by** comprising 0.01 to 0.3 parts by mass of (a) zinc acetylacetonate, 0.1 to 10 parts by mass of (b) a zinc-modified hydrotalcite and 0.1 to 10 parts by mass of (c) an ultraviolet absorber, with respect to 100 parts by mass of a vinyl chloride-based resin.

2. The vinyl chloride-based resin composition for transparent products according to claim 1, wherein the amount of zinc acetylacetonate is 0.05 to 0.2 parts by mass with respect 100 parts by mass of a vinyl chloride-based resin.

3. The vinyl chloride-based resin composition for transparent products according to claim 1, wherein the amount of zinc-modified hydrotalcite is 0.5 to 5 parts by mass with respect to 100 parts by mass of a vinyl chloride-based resin.

4. The vinyl chloride-based resin composition for transparent products according to claim 1, wherein the amount of ultraviolet absorber is 0.5 to 10 parts by mass with respect to 100 parts by mass of a vinyl chloride-based resin.

5. The vinyl chloride-based resin composition for transparent products according to claim 1, wherein the zinc-modified hydrotalcite is coated with a higher fatty acid, a higher fatty acid metal salt, an organic sulfonic acid metal salt, a higher fatty acid amide, a higher fatty acid ester or a wax.

6. The vinyl chloride-based resin composition for transparent products according to claim 1, wherein said (b) zinc-modified hydrotalcite is a compound represented by the following Formula (1):
Mgₓ₁Znₓ₂Al₂(OH)_{2(X1+X2)+4} · CO₃ · mH₂O (I)
(wherein, x1 and x2 each represent a number satisfying the following equations and m represents a real number: 0.1 ≤ x2/x1 < 10, 2 ≤ x1 + x2 < 20).

7. The vinyl chloride-based resin composition for transparent products according to claim 1, wherein the ultraviolet absorber is selected from 2-hydroxybenzophenones, 2-(2'-hydroxyphenyl)benzotriazoles, benzoates, substituted oxanilides, and cyanoacrylates.

8. The vinyl chloride-based resin composition for transparent products according to claim 7, wherein said (c) ultraviolet absorber is a substituted oxanilide.

9. The vinyl chloride-based resin composition for transparent products according to claim 1, which further comprises 0.001 to 5 parts by mass of (d) a polyol with respect to 100 parts by mass of said vinyl chloride-based resin.

10. The vinyl chloride-based resin composition for transparent products according to claim 9, wherein the amount of polyol is 0.05 to 3 parts by mass with respect to 100 parts by mass of a vinyl chloride-based resin.

11. The vinyl chloride-based resin composition for transparent products according to claim 9 or 10, wherein said (d) polyol is at least one selected from the group consisting of maltitol, mannitol and lactitol.

12. A transparent product comprising the composition according to claim 1.

## Patentansprüche

1. Harzzusammensetzung auf Vinylchloridbasis für transparente Produkte, die **dadurch gekennzeichnet ist, dass** sie 0,01 bis 0,3 Massenanteile von (a) Zinkacetylacetonat, 0,1 bis 10 Massenanteile von (b) einem zinkmodifizierten Hydrotalkit und 0,1 bis 10 Massenanteile von (c) einem Ultraviolettabsorber umfasst, bezogen auf 100 Massenanteile eines Harzes auf Vinylchloridbasis.

2. Harzzusammensetzung auf Vinylchloridbasis für transparente Produkte nach Anspruch 1, wobei die Menge von Zinkacetylacetonat 0,05 bis 0,2 Massenanteile beträgt, bezogen auf 100 Massenanteile eines Harzes auf Vinylchloridbasis.

3. Harzzusammensetzung auf Vinylchloridbasis für transparente Produkte nach Anspruch 1, wobei die Menge eines zinkmodifizierten Hydrotalkits 0,5 bis 5 Massenanteile beträgt, bezogen auf 100 Massenanteile eines Harzes auf Vinylchloridbasis.

4. Harzzusammensetzung auf Vinylchloridbasis für transparente Produkte nach Anspruch 1, wobei die Menge eines Ultraviolettabsorbers 0,5 bis 10 Massenanteile beträgt, bezogen auf 100 Massenanteile eines Harzes auf Vinylchloridbasis.

5. Harzzusammensetzung auf Vinylchloridbasis für transparente Produkte nach Anspruch 1, wobei der zinkmodifizierte Hydrotalkit mit einer höheren Fettsäure, einem höheren Fettsäuremetallsalz, einem organischen Sulfonsäuremetallsalz, einem höheren Fettsäureamid, einem höheren Fettsäureester oder einem Wachs beschichtet ist.

6. Harzzusammensetzung auf Vinylchloridbasis für transparente Produkte nach Anspruch 1, wobei der (b) zinkmodifizierte Hydrotalkit eine Verbindung ist, die durch die folgende Formel (1) dargestellt wird:
Mgₓ₁Znₓ₂Al₂(OH)_{2(X1+X2),4} • CO₃ • mH₂O (I)
(wobei x1 und x2 jeweils eine Zahl darstellen, die die folgenden Gleichungen erfüllt, und m eine reelle Zahl darstellt: 0,1 ≤ x2/x1 ≤ 10, 2 ≤ x1 + x2 ≤ 20).

7. Harzzusammensetzung auf Vinylchloridbasis für transparente Produkte nach Anspruch 1, wobei der Ultraviolettabsorber ausgewählt ist aus 2-Hydroxybenzophenonen, 2-(2'-Hydroxyphenyl)benzotriazolen, Benzoaten, substituierten Oxaniliden und Cyanacrylaten.

8. Harzzusammensetzung auf Vinylchloridbasis für transparente Produkte nach Anspruch 7, wobei der (c) Ultraviolettabsorber ein substituiertes Oxanilid ist.

9. Harzzusammensetzung auf Vinylchloridbasis für transparente Produkte nach Anspruch 1, die ferner 0,001 bis 5 Massenanteile von (d) einem Polyol umfasst, bezogen auf 100 Massenanteile des Harzes auf Vinylchloridbasis.

10. Harzzusammensetzung auf Vinylchloridbasis für transparente Produkte nach Anspruch 9, wobei die Menge von Polyol 0,05 bis 3 Massenanteile beträgt, bezogen auf 100 Massenanteile eines Harzes auf Vinylchloridbasis.

11. Harzzusammensetzung auf Vinylchloridbasis für transparente Produkte nach Anspruch 9 oder 10, wobei das (d) Polyol wenigstens eines ist, ausgewählt aus der Gruppe bestehend aus Maltit, Mannit und Lactit.

12. Transparentes Produkt, umfassend die Zusammensetzung nach Anspruch 1.

## Revendications

1. Composition de résine à base de chlorure de vinyle pour produits transparents, qui **est caractérisée en ce qu'**elle comprend 0,01 à 0,3 partie en masse (a) d'acétylacétonate de zinc, 0,1 à 10 parties en masse (b) d'une hydrotalcite modifiée par zinc et 0,1 à 10 parties en masse (c) d'un absorbant ultraviolet, rapportées à 100 parties en masse d'une résine à base de chlorure de vinyle.

2. Composition de résine à base de chlorure de vinyle pour produits transparents selon la revendication 1, la quantité d'acétylacétonate de zinc étant de 0,05 à 0,2 partie en masse rapportée à 100 parties en masse d'une résine à base de chlorure de vinyle.

3. Composition de résine à base de chlorure de vinyle pour produits transparents selon la revendication 1, la quantité d'hydrotalcite modifiée par zinc étant de 0,5 à 5 parties en masse rapportées à 100 parties en masse d'une résine à base de chlorure de vinyle.

4. Composition de résine à base de chlorure de vinyle pour produits transparents selon la revendication 1, la quantité d'absorbant ultraviolet étant de 0,5 à 10 parties en masse rapportées à 100 parties en masse d'une résine à base de chlorure de vinyle.

5. Composition de résine à base de chlorure de vinyle pour produits transparents selon la revendication 1, l'hydrotalcite modifiée par zinc étant revêtue avec un acide gras supérieur, un sel métallique d'acide gras supérieur, un sel métallique d'acide sulfonique organique, un amide d'acide gras supérieur, un ester d'acide gras supérieur ou une cire.

6. Composition de résine à base de chlorure de vinyle pour produits transparents selon la revendication 1, ladite (b) hydrotalcite modifiée par zinc étant un composé représenté par la formule (1) suivante :
Mgₓ₁Znₓ₂Al₂(OH)_{2(x1 +x2)+4} • CO₃ • mH₂O (I)
(x1 et x2 représentant chacun un nombre satisfaisant les équations suivantes et m représentant un nombre réel : 0,1 ≤ x2 / x1 < 10, 2 ≤ x1 + x2 < 20).

7. Composition de résine à base de chlorure de vinyle pour produits transparents selon la revendication 1, l'absorbant ultraviolet étant choisi parmi des 2-hydroxybenzophénones, des 2-(2'-hydroxyphényl)benzotriazoles, des benzoates, des oxanilides substitués et des cyanoacrylates.

8. Composition de résine à base de chlorure de vinyle pour produits transparents selon la revendication 7, ledit (c) absorbant ultraviolet étant un oxanilide substitué.

9. Composition de résine à base de chlorure de vinyle pour produits transparents selon la revendication 1, qui comprend en outre de 0,001 à 5 parties en masse (d) d'un polyol rapportées à 100 parties en masse de ladite résine à base de chlorure de vinyle.

10. Composition de résine à base de chlorure de vinyle pour produits transparents selon la revendication 9, la quantité de polyol étant de 0,05 à 3 parties en masse rapportées à 100 parties en masse d'une résine à base de chlorure de vinyle.

11. Composition de résine à base de chlorure de vinyle pour produits transparents selon la revendication 9 ou 10, ledit (d) polyol étant au moins un élément choisi dans le groupe constitué de maltitol, de mannitol et de lactitol.

12. Produit transparent comprenant la composition selon la revendication 1.
